Europäisches Patentamt

European Patent Office

Office européen des brevets

(11) Publication number: **0 384 254**
**A2**

# (12) EUROPEAN PATENT APPLICATION

(21) Application number: **90102648.4**

(22) Date of filing: **10.02.90**

(51) Int. Cl.5: **C08L 95/00**

(30) Priority: **21.02.89 US 312726**

(43) Date of publication of application:
**29.08.90 Bulletin 90/35**

(84) Designated Contracting States:
**BE CH DE ES FR GB IT LI NL SE**

(71) Applicant: **BASF Aktiengesellschaft**
**Carl-Bosch-Strasse 38**
**D-6700 Ludwigshafen(DE)**

(72) Inventor: **Liu, Richard Wai-Chun**
**1231 Wiltshire Drive**
**Sarnia, Ontario N7S 3W3(CA)**
Inventor: **Lok, Kar Pui**
**690 Esser Crescent**
**Clearwater, Ontario N7S 5L4(CA)**
Inventor: **Pole, Ernest George**
**1862 Lakeland Avenue**
**Clearwater, Ontario N7X 1G3(CA)**

(54) Latex compounds for asphalt modifications.

(57) Asphalt mastics modified with polymers containing residual unsaturation in their backbone and having a gel content of less than 60 weight percent, said polymers being crosslinked with sulphur and vulcanization accelerators and activators.

## LATEX COMPOUNDS FOR ASPHALT MODIFICATIONS

The present invention relates to polymer modified asphalt mastics. More particularly, the present invention relates to an asphalt mastic which is modified with styrene-butadiene (SB) polymers and which is crosslinked with sulphur and vulcanization accelerators sulfur donor system.

It has been known for some time to modify asphalts with polymers. The polymer modification of asphalt mastics generally improves the low temperature properties of asphalt mastics such as reducing brittleness and increasing penetration at temperatures less than about $4^\circ$ C. At high temperatures of about $65^\circ$ C (the temperature of an asphalt road surface on a hot day in summer) the viscosity of the asphalt mastics is increased so that it is less likely to flow. While it is recognized that polymer modification of asphalt is useful in modifying the properties of asphalt mastics it is extremely difficult to verify the presence of low levels of polymers in asphalt mastics.

One method for determining the presence of polymer in asphalt mastics is used by the California Highways Department (CAL-332). This test may be applied to both hot melt and emulsion asphalt mastics. If an emulsion is tested the emulsion is dewatered, usually by heat, to leave a dry mixture. The mixture is placed in a cup (3 oz. can) and a spindle is placed into the mixture. The spindle is rotated $180^\circ$ and the torsional recovery of the spindle at 30 seconds and at 30 minutes is measured. To pass the test the total torsional recovery at 30 minutes must be at least 20.2% of the initial $180^\circ$ deformation. While the test will demonstrate the presence of polychloroprene in some types of asphalt mastics, asphalt mastics modified with styrene butadiene polymers do not pass the test. There is a need to find compounds of materials other than polychloroprene which will meet or surpass the standards of CAL-332. The test really measures the elastomeric component or properties of the asphalt mastic. These properties are important to mastics in a number of applications in addition to that of a binder in road ways. In effect, the test measures the elastomeric response of the asphalt.

The paper, "New Rubberized Asphalt for Roads" by J. York Welborn, and John F. Babashak Jr., Journal of the Highway Division, Proceedings of the American Society of Civil Engineers, proceeding paper 1651, May 1958, discusses modification of asphalt mastic with up to 3% by dry weight of latices of natural or synthetic rubber, and up to 15% based on the weight of the rubber of sulphur (e.g. 0.45 weight percent on asphalt).

The paper discloses the use of significantly lower quantities of sulphur than contemplated in the present invention. The reference fails to teach the use of accelerators. Additionally, the paper suggests that natural rubber is a preferred polymer. Finally the paper does not suggest such a composition would have improved torsional recovery as disclosed in the present case.

The present invention provides a polymer modified asphalt mastic composition comprising per 100 parts by weight of asphalt from 1 to 5 parts by weight of a polymer containing residual unsaturation in its backbone and having a gel content of less than 60 weight percent based on the size exclusion chromatography method, a sufficient amount of sulphur or a sulphur donor to provide from 1 to 5 parts by weight of sulphur, and from 0.5 to 5 parts by weight of one or more vulcanization accelerators which composition upon curing has a torsional recovery of at least 20% at 30 seconds measured using the procedure of CAL 332

The asphalts useful in accordance with the present invention may be natural asphalts such as Trinidad Asphalt, and asphalt derived from the refining of petroleum oil. The present invention may be applied to solid hot-melt asphalt mastics or it may be used in conjunction with mastic asphalt emulsions. Asphalt emulsions are usually cationic (C grades e.g. CRS-) but anionic grades may also be used. For construction purposes such as paving or roofing, depending on the climate, the asphalt may have a penetration from 85 to 150. The standard penetration test consists of bringing a sample of asphalt cement to a temperature of $25^\circ$ C in a temperature-controlled water bath. A needle of prescribed dimensions under a load of 100 gm is brought to bear on the surface of the asphalt cement for exactly five seconds. The distance that the needle penetrates into the asphalt cement is recorded in units of 0.1 mm. The number of units is called the "penetration" of the sample. If an emulsion is used for construction purposes it is preferably a rapid set anionic (RS-) or a cationic (CRS-) grade emulsion.

The polymers useful in accordance with the present invention are polymers which contain residual unsaturation in their backbones and have a gel content of less than 60 weight percent, preferably less than 30 weight percent. As used in this specification the term gel content means that portion of the polymer which is insoluble in common organic (hydrocarbon) solvents such as tetrahydrofuran and toluene.

Since the polymer must contain residual unsaturation in the backbone, the monomers used to polymerize the polymer must provide a residue containing a double bond. Perhaps the most useful

2

monomers of this type are the aliphatic $C_{4-6}$ conjugated diolefins such as butadiene and isoprene. Such monomers may be homopolymerized or may be copolymerized with one or more $C_{8-12}$ vinyl aromatic monomers which are unsubstituted or substituted by $C_{1-4}$ alkyl substitutes or a chlorine atom. Suitable vinyl aromatic monomers include styrene and alpha-methylstyrene.

Suitable polymers comprise from 80 to 20 weight percent of one or more $C_{4-6}$ conjugated diolefins and from 20 to 80 weight percent of one or more $C_{8-12}$ vinyl aromatic monomers. Optionally, the polymers may further comprise from 0 up to 10, preferably from 0.5 to 5 weight percent of one or more functional monomers selected from the group consisting of:

i) $C_{3-6}$ ethylenically unsaturated carboxylic acids;

ii) $C_{3-6}$ ethylenically unsaturated aldehydes;

iii) $C_{1-8}$ alkyl and hydroxy alkyl esters of $C_{3-6}$ ethylenically unsaturated carboxylic acids; and

iv) amides of $C_{3-6}$ ethylenically unsaturated carboxylic acids, which amides may be unsubstituted or substituted at the nitrogen atom by up to two substitutes selected from the group consisting of $C_{1-4}$ alkyl groups and $C_{1-4}$ hydroxy alkyl groups.

Useful functional monomers include acrylic acid, methacrylic acid, fumaric acid, itaconic acid, acrolein, methyl-, ethyl-, propyl-, butyl-, hexyl-, hydroxyethyl-, and ethylhexyl esters of acrylic and methacrylic acids, acrylamide, methacrylamide, and N-methylol acrylamide.

In accordance with the present invention the polymer is used in an amount from 1 to 5, preferably 2.5 to 3.5 parts by weight per 100 parts by weight of asphalt.

In one embodiment the sulphur useful in accordance with the present invention is used in the form of a powder. Preferably the powder, is incorporated into a dispersion for mixing with the latex or the asphalt. The sulphur is used in an amount to provide from 1 to 5, preferably 2.5 to 3.5 parts by weight per 100 parts by weight of asphalt.

In another embodiment a sulphur donor may be used in conjunction with or in place of sulfur. The sulfur donor should be used in an amount to provide a sufficient amount of sulphur as noted above. Useful sulphur donors include tetramethylthiuram disulphide (TMTD) activated by thiourea.

In yet another embodiment the sulphur donor may be in the form of a water soluble sulphur compound, for example, an ethanolamine sulphide. This is a preferred method of providing the sulphur necessary to the present invention where long term storage stability is an important factor. This type of water-soluble sulphur donor can be made, for example, by heating sulphur and triethanolamine at $100^\circ$ C. The resulting material contains approximately 7 to 9 percent sulphur.

There are many different types of curing or vulcanization accelerators. These materials may be activated by metal oxides such as zinc and magnesium oxide. The accelerators may be organic compounds or salts of organic compounds such as thiazoles, thiuram sulfides, and (di)-thiocarbamates. Useful accelerators are listed in a number of books including the Rubber Red Book, published annually by Communication Channels Inc., 6255 Barfield Road, Atlanta Ga. 30328. A particularly preferred group of accelerators include zinc salts of mercaptobenzothiazole, and zinc diethyldithiocarbamate. Where water-soluble sulphur compounds are used, a water-soluble zinc amine salt is the preferred activator with a water soluble accelerator such as sodium diethyldithiocarbamate. The zinc amine salt can be obtained by dissolving zinc sulphate in an ammonium hydroxide solution.

As pointed out above, where long term storage stability is a prime concern this water-soluble ethanolamine sulphide sulphur donor, zinc amine salt and water soluble vulcanization accelerator system is a preferred embodiment.

The accelerators may be used in an amount from about 0.5 to 5, preferably from about 2 to 3 parts by weight per 100 parts by weight of asphalt.

Therefore a preferred polymer modified asphalt mastic composition of the present invention having long term storage stability comprises: per 100 parts by weight of asphalt, from 1 to 5 parts by weight of a polymer containing residual unsaturation in its backbone and having a gel content of less than 30 weight percent, a water-soluble sulphur donor in an amount to provide from 1 to 5 parts of weight of sulphur, and from 0.5 to 5 parts by weight of a water-soluble vulcanization accelerator and activator, which composition upon curing has a torsional recovery test of at least 20 percent at 30 seconds as measured using the procedures of CAL-332.

As noted above, the compounds of the present invention may be used in the form of a hot melt or an emulsion, preferably a cationic emulsion. If used in emulsion form the component emulsions should be compatible. That is, the asphalt emulsion and latex should be of the same charge (e.g anionic or cation) or be uncharged. Thus, an anionic emulsion may be mixed with a nonionic emulsion. A cationic emulsion may be mixed with nonionic emulsion. A cationic emulsion should not be mixed with an anionic emulsion. This is likely to destabilize the resulting compound.

To obtain best results for short term testing it is preferable that the compound be heated to a temperature of about 138°C for less than 1 hour. In hot mixes, this is not a problem. If the mixture is kept at this temperature for too long, the rubber may begin to degrade. Preferably the compound will not be held at this temperature for periods of time in excess of about 24 hours. The rubber may be protected to an extent from degradation by incorporating antioxidants such as hindered phenolic compounds into the asphalt mastic.

The torsional recovery of the compounds of the present invention should be at least 20% at 30 seconds measured using the procedures of CAL 332. Preferably the recovery is at least 20% most preferably at least 20.2% as measured by CAL 332, (eg. 30 sec and 30 min recovery.) Emulsion systems will generally not be heated to elevated temperatures. Rather, the curing will take place over much longer periods of time after the emulsion has been broken and set in place (e.g. - hot summer days).

The following examples are intended to illustrate the invention and not to limit it. In the examples, amounts, unless otherwise specified, are parts by weight (e.g. - the weight ratios of the ingredients).

Example 1

A series of asphalt compounds were prepared. The base asphalt was Shell Martinez asphalt grade AC-5. The latex used was commercially available styrene butadiene latex sold as POLYSAR latex 275 having a gel content of about 60% and a styrene content of less than about 30 weight percent. The sulphur was used in the form of a powder. The accelerators were zinc oxide used in powder form and zinc diethyldithiocarbamate (sold under the trademark ETHYL ZIMATE).

The asphalt was heated to 138°C in an oil bath. Under stirring latex, sulphur and zinc oxide were added to the hot asphalt and then mixed; 15 minutes after ETHYL ZIMATE was added to the asphalt. Two minutes later the asphalt mixture was then placed in a 3 oz. can and the disc, spider and indicator required in CAL-332 were placed in position. After the asphalt had cooled to room temperature the torsional recovers of the asphalt was determined in accordance with CAL 332. The formulations and results are set forth in Table I.

TABLE I

| Compound | 1 | 2 | 3 | 4 |
|---|---|---|---|---|
| Asphalt % Shell AC-5 | 100 | 100 | 100 | 100 |
| Latex POLYSAR 275 | 0 | 0 | 3 | 3 |
| Sulphur (powder) | 0 | 1 | 0 | 1 |
| Zinc Oxide | 0 | 1 | 0 | 1 |
| Zinc diethyldithiocarbamate (ETHYL ZIMATE) | 0 | 1 | 0 | 1 |
| 30 minute Torsional Recovery % CAL - 332 | 0 | 0 | 6.8 | 26 |

These results show that improved torsional recovery is obtained in the presence of polymer, sulphur, and cure accelerators.

Example 2

The procedure of Example 1 was repeated except that the polymers used were natural rubber and polychloroprene. The polychloroprene was a low gel, low crystallinity copolymer of chloroprene and methacrylic acid. The tests were carried out both in the absence and presence of sulphur and accelerators.

TABLE II

| Compound | 1 | 2 | 3 | 4 |
|---|---|---|---|---|
| Asphalt Shell AC-5 | 100 | 100 | 100 | 100 |
| Natural Rubber Latex (62.8% solids) | 3 | 3 | 0 | 0 |
| Polychloroprene Latex | 0 | 0 | 3 | 3 |
| Sulphur (powder) | 0 | 1 | 0 | 1 |
| Zinc Oxide (powder) | 0 | 1 | 0 | 1 |
| Zinc Diethyldithiocarbamate | 0 | 1 | 0 | 1 |
| Torsional Recovery % (at 30 sec.) | 23.8 | 39.3 | -- | 19 |
| Torsional Recovery % (CAL 332) (at 30 min) | 5.9 | 11 | 6.8 | 6.8 |

The test shows that both the 30 sec. and 30 min. torsional recovery for the asphalt modified with natural rubber and the sulfur recipe improved noticeably. The same recipe for polychloroprene is not effective; this is probably because polychloroprene needs other types of cure systems.

Example 3 - Sulphur Donor System

Asphalt was heated to 138° C and styrene butadiene latex (Polysar L 275) was slowly added with stirring to allow water to evaporate. Then thiourea and tetramethyl thiuram disulphide (TMTD) sulphur donor accelerator was added and 5 minutes later the blend was poured into torsional recovery cups and heated for 1 hour at 160° C before testing. The formulations and results are set forth below.

TABLE III

| | Control | Compound |
|---|---|---|
| Asphlat (AC-5) | 100 | 100 |
| Latex (dry Polysar L 275) | 3 | 3 |
| TMTD | - | 3 |
| Thiourea | - | 1 |
| Torsional Recovery | | |
| at 30 sec % | 21 | 45 |
| at 30 min % | 5 | 3 |

This experiment illustrates that sulphur donors are useful in the present invention.

Example 4

A series of cationic asphalt emulsions were modified with a latex both in the presence and absence of sulphur and accelerators. The asphalt emulsion and latex were mixed in a glass beaker for one hour. The latex/asphalt mixture was poured in a shallow pie plate and placed in an oven at 118° C for 1 hour. Then the temperature in the oven was raised to 138° C for 2 1/2 hours to evaporate all the water. Then the torsional recovery test (CAL 332) was carried out on the samples. The sample containing sulphur and accelerators was prepared as above except that to the hot melt was added sulphur and ZnO and the compound was mixed and kept at 138° C for 15 min. Then ETHYL ZIMATE (trade name) was added to the melt and the contents stirred for 2 minutes. Then the torsional recovery of the mixture was taken. The latices used were a styrene-butadiene latex (Polysar Latex 298) and a polychloroprene latex. The compounds and the results are set forth in table IV.

5

TABLE IV

| Compound | A | | B | | C | |
|---|---|---|---|---|---|---|
| Parts by Wt. | Dry | Wet | Dry | Wet | Dry | Wet |
| Asphalt (cationic CMS 2-AC-5) | 97 | 147 | 97 | 147 | 97 | 147 |
| Latex - SBR (polysar 298) | 3 | 4.77 | - | - | 3 | 4.77 |
| Polychloroprene | - | - | 3 | 6.46 | - | - |
| Sulphur | - | - | - | - | 1 | |
| ZnO | - | - | - | - | 1 | |
| Zinc Diethyldithiocarbamate (ETHYL ZIMATE) | - | - | - | - | 1 | |
| Torsional Recovery | | | | | | |
| at 30 Sec(%) | 12.5 | | 22.6 | | 44 | |
| at 30 Min(%) | 1.2 | | 7.1 | | 5 | |

This illustrates that the present invention is useful with emulsion systems.

**Claims**

1. A polymer modified asphalt mastic composition comprising: per 100 parts by weight of asphalt, from 1 to 5 parts by weight of a polymer containing residual unsaturation in its backbone and having a gel content of less than 60 weight percent, sulphur or a sulphur donor in an amount to provide from 1 to 5 parts by weight of sulphur, and from 0.5 to 5 parts by weight of one or more vulcanization accelerators, which composition upon curing has a torsional recovery test of at least 20 percent at 30 seconds as measured using the procedures of CAL-332.

2. A composition according to Claim 1 wherein said sulphur or sulphur donor is selected from the group consisting of sulphur powder, tetramethyl thiuram disulphide and water-soluble ethanolamine sulphide.

3. A composition according to Claim 1 or 2 wherein said sulphur or sulphur donor is present in an amount to provide from 2.5 to 3.5 parts by weight of sulphur.

4. A composition according to any one of Claims 1 to 3 wherein said polymer is present in an amount from 2.5 to 3.5 parts by weight.

5. A composition according to any one of Claims 1 to 4 wherein said polymer comprises:
   A) 20 to 80 weight percent of one or more $C_{8-12}$ vinyl aromatic monomers; and
   B) 80 to 20 weight percent of one or more $C_{4-6}$ conjugated diolefins.

6. A composition according to Claim 5 wherein said vinyl aromatic monomer is selected from the group consisting of styrene and alpha-methylstyrene and said conjugated diolefin is butadiene.

7. A composition according to Claim 6 wherein said polymer further comprises up to 10 weight percent of one or more monomers selected from the group consisting of:
   i) $C_{3-6}$ ethylenically unsaturated carboxylic acids;
   ii) $C_{3-6}$ ethylenically unsaturated aldehydes;
   iii) $C_{1-8}$ alkyl and hydroxy alkyl esters of $C_{3-6}$ ethylenically unsaturated carboxylic acids; and
   iv) amides of $C_{3-6}$ ethylenically unsaturated carboxylic acids, which amides, may be unsubstituted or substituted at the nitrogen atom by up to two radicals selected from the group consisting of $C_{1-4}$ alkyl and hydroxyalkyl radicals.

8. A composition according to any one of Claims 1 to 7 wherein said one or more vulcanization accelerators and activators are selected from the group consisting of zinc oxide, thiazoles, thiurams, and thiocarbamates.

9. A composition according to Claim 8 wherein said one or more vulcanization accelerators and activators are present in an amount from 2 to 3 parts by weight per 100 parts by weight of asphalt and are selected from the group consisting of zinc oxide, zinc salt of mercaptobenzothiazole, and zinc diethyl-dithiocarbamate and a mixture thereof.

10. A composition according to any one of Claims 1 to 9 which has a torsional recovery of at least 20.2 percent as measured by CAL 332.

11. A composition according to any one of Claims 1 to 10 wherein said modified asphalt composition is in the form of a cationic emulsion.

12. A polymer modified asphalt mastic composition comprising: per 100 parts by weight of asphalt, from 1 to 5 parts by weight of a polymer containing residual unsaturation in its backbone and having a gel content of less than 30 weight percent, a water-soluble sulphur donor in an amount to provide from 1 to 5 parts of weight of sulphur, and from 0.5 to 5 parts by weight of a water-soluble vulcanization accelerator and activator, which composition upon curing has a torsional recovery test of at least 20 percent at 30 seconds as measured using the procedures of CAL-332.

Claims for the following Contracting State:ES

1. A process for the production of a polymer modified asphalt mastic composition having upon curing a torsional recovery test of at least 20 percent at 30 seconds as measured using the procedures of CAL-332, said process comprising: adding to molten or dispersed asphalt per 100 parts by weight of asphalt, from 1 to 5 parts by weight of a polymer containing residual unsaturation in its backbone and having a gel content of less than 60 weight percent, sulphur or a sulphur donor in an amount to provide from 1 to 5 parts by weight of sulphur, and from 0.5 to 5 parts by weight of one or more vulcanization accelerators.

2. A process according to Claim 1 wherein said sulphur or sulphur donor is selected from the group consisting of sulphur powder, tetramethyl thiuram disulphide and water-soluble ethanolamine sulphide.

3. A process according to Claim 1 or 2 wherein said sulphur or sulphur donor is added in an amount to provide from 2.5 to 3.5 parts by weight of sulphur.

4. A process according to any one of Claims 1 to 3 wherein said polymer is added in an amount from 2.5 to 3.5 parts by weight.

5. A process according to any one of Claims 1 to 4 wherein said polymer comprises:

A) 20 to 80 weight percent of one or more $C_{8-12}$ vinyl aromatic monomers; and

B) 80 to 20 weight percent of one or more $C_{4-6}$ conjugated diolefins.

6. A process according to Claim 5 wherein said vinyl aromatic monomer is selected from the group consisting of styrene and alpha-methylstyrene and said conjugated diolefin is butadiene.

7. A process according to Claim 6 wherein said polymer further comprises up to 10 weight percent of one or more monomers selected from the group consisting of:

i) $C_{3-6}$ ethylenically unsaturated carboxylic acids;

ii) $C_{3-6}$ ethylenically unsaturated aldehydes;

iii) $C_{1-8}$ alkyl and hydroxy alkyl esters of $C_{3-6}$ ethylenically unsaturated carboxylic acids; and

iv) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals.

8. A process according to any one of Claims 1 to 7 wherein said one or more vulcanization accelerators and activators are selected from the group consisting of zinc oxide, thiazoles, thiurams, and thiocarbamates.

9. A process according to Claim 8 wherein said one or more vulcanization accelerators and activators are added in an amount from 2 to 3 parts by weight per 100 parts by weight of asphalt and are selected from the group consisting of zinc oxide, zinc salt of mercaptobenzothiazole, and zinc diethyldithiocarbamate and a mixture thereof.

10. A process according to any one of Claims 1 to 9 which results in a composition having a torsional recovery of at least 20.2 percent as measured by CAL 332.

11. A process according to any one of Claims 1 to 10 wherein said modified asphalt is used in the form of a cationic emulsion.